# EUROPEAN PATENT APPLICATION

(11) **EP 1 942 302 A1**
(43) Date of publication of application: **09.07.2008**
(21) Application number: 06822965.7
(22) Date of filing: 27.10.2006
(51) Int. Cl.: F21V 8/00, G02B 6/00, G02F 1/13357, F21Y 101/02

(54) **SURFACE-EMITTING DEVICE AND LIGHT-EMITTING METHOD FOR SURFACE-EMITTING DEVICE**

(30) Priority: 28.10.2005 JP 2005314993; 28.10.2005 JP 2005315169
(71) Applicant: TAKIRON CO., LTD., Osaka-shi Osaka (JP)
(72) Inventor: OMURA, Yutakac/o Takiron Co., Ltd., Osaka;5410052 (JP); KAJITANI, Fujioc/o Takiron Co., Ltd, Osaka;5410052 (JP); IWASAKI, Masaruc/o Takiron Co., Ltd.,, Osaka;5410052 (JP); KATAKURA, Tsutomuc/o Takiron Co., Ltd, Osaka-shi;5410052 (JP)
(74) Representative: Bates, Philip Ian
(86) International application number: PCT/JP2006/322047
(87) International publication number: WO 2007/049823

(57) **Abstract**

An object of the invention is to provide a thin, low-power consumption, light-weight, and inexpensive surface light emitting apparatus using a hollow multilayer structure in combination with LEDs, and a method of light emission for the same. More specifically, the invention provides a surface light emitting apparatus comprising: a hollow multilayer structure formed from a plurality of hollow cells; a light source for emitting light into the hollow multilayer structure through an end face thereof containing a cell opening; and optical means for causing the light introduced through the cell opening-containing end face of the hollow multilayer structure to emerge from a surface of the hollow multilayer structure.

## Description

### FIELD OF THE INVENTION

The present invention relates to a surface light emitting apparatus and a method of light emission for the same, and more particularly to a surface light emitting apparatus using a hollow multilayer structure and a method of light emission for the same.

### BACKGROUND OF THE INVENTION

A surface light emitting apparatus used as a backlight for a liquid crystal display or the like, achieves surface illumination by causing light from a line light source such as a cold-cathode tube to spread evenly by using a flat light-conducting plate (refer, for example, to patent document 1), to obtain a white light output of uniform brightness across the display's surface area by using a light-conducting plate and a diffusing plate or sheet in order to illuminate the liquid crystal display. A color display can be achieved by combining such a surface light emitting apparatus with a liquid crystal unit constructed from a number of layers such as liquid crystal, color filter, and black matrix layers, but the structure as a whole becomes complex and costly.

It is also known to arrange a plurality of relatively inexpensive LEDs at equally spaced intervals on a substrate and use the LED array as a surface illumination apparatus for directly illuminating a billboard or the like from the back side thereof. However, with such a surface illumination apparatus, it has been difficult to produce a clearly defined pattern on the illuminated surface.

Further, a surface light source is known that is constructed by arranging side by side a plurality of light conductive transparent rods each being circular in cross section and having LEDs mounted at both ends thereof (refer, for example, to patent document 2). However, even if a plurality of such circular rods are arranged close to each other, dark areas occur between the transparent rods, and it has not been possible to construct a surface light emitting apparatus that can produce patterns having clearly defined boundaries.

On the other hand, it is known to provide a hollow structural plate made of a synthetic resin and used as a replacement for corrugated cardboard made of paper (refer, for example, to patent document 3). However, it is not known to use such a hollow structural plate for the construction of a surface light emitting apparatus for illuminating a display or the interior of a building or other articles such as furniture.

Patent document 1: Japanese Unexamined Patent Publication No. H11-237629

Patent document 2: Japanese Unexamined Patent Publication No. 2004-39482

Patent document 3: Japanese Unexamined Patent Publication No. H08-72137

### SUMMARY OF THE INVENTION

Accordingly, it is an object of the present invention to provide a surface light emitting apparatus using a hollow multilayer structure, and a method of light emission for the same.

It is another object of the present invention to provide a thin, low-power consumption, light-weight, and inexpensive surface light emitting apparatus using a hollow multilayer structure in combination with LEDs, and a method of light emission for the same.

To solve the above problem, a surface light emitting apparatus according to the present invention includes a hollow multilayer structure formed from a plurality of hollow cells, a light source for emitting light into the hollow multilayer structure through an end face thereof containing a cell opening, and light deflecting means for causing the light introduced through the cell opening-containing end face of the hollow multilayer structure to emerge from a surface of the hollow multilayer structure.

Preferably, in the surface light emitting apparatus according to present invention, the light deflecting means is a random projection/depression pattern, a dot pattern, or a V-shaped or U-shaped groove formed on the surface of the hollow multilayer structure.

Preferably, in the surface light emitting apparatus according to present invention, the light deflecting means is a diffusing material added in the hollow multilayer structure.

Preferably, in the surface light emitting apparatus according to present invention, the light deflecting means is a light conducting member inserted in each of the hollow cells, and preferably, the light conducting member is formed at its surface with a random projection/depression pattern, a dot pattern, or a V-shaped or U-shaped groove, or a diffusing material is added in the light conducting member.

Preferably, in the surface light emitting apparatus according to present invention, the light deflecting means is a light diffusing material inserted in each of the hollow cells.

Preferably, in the surface light emitting apparatus according to present invention, the light source is constructed from a plurality of LEDs, and preferably, the plurality of LEDs are respectively mounted in the plurality of hollow cells.

Preferably, in the surface light emitting apparatus according to present invention, the plurality of LEDs are mounted one for one in the plurality of hollow cells at least at one of two cell opening-containing end faces of the hollow multilayer structure.

To solve the above problem, a method of light emission for a surface light emitting apparatus according to present invention includes the steps of arranging a plurality of light sources for each of a plurality of hollow cells each separated by a transparent rib, introducing differently colored lights respectively emitted from the plurality of light sources into a corresponding one of the plurality of hollow cells, and emerging colored light produced by mixing the differently colored lights emitted from the plurality of light sources from a surface of a hollow multilayer structure.

To solve the above problem, an alternative method of light emission for a surface light emitting apparatus according to present invention includes the steps of arranging a plurality of light sources for each of a plurality of hollow cells each separated by an opaque rib, introducing differently colored lights respectively emitted from the plurality of light sources into a corresponding one of the plurality of hollow cells, and emerging the differently colored lights emitted from the plurality of light sources and prevented from mixing with each other by the opaque rib from a surface of a hollow multilayer structure.

Preferably, in the method of light emission for the surface light emitting apparatus according to present invention, the plurality of light sources each include a red LED element, a green LED element, and a blue LED element.

Preferably, in the method of light emission for the surface light emitting apparatus according to present invention, each of the plurality of light sources is a single red LED, a single green LED, a single blue LED, or a single white LED.

Preferably, the method of light emission for the surface light emitting apparatus according to present invention further comprises the step of causing the colors of the colored lights being emitted from the plurality of light sources to change as time elapses.

According to the present invention, since surface illumination is accomplished by introducing light through the cell opening-containing end face of the hollow multilayer structure, it becomes possible to provide a thin, low-power consumption, light-weight, and inexpensive surface light emitting apparatus.

Furthermore, according to the present invention, since the light from the light source is emitted indirectly through the cell opening-containing end face of the hollow multilayer structure, it becomes possible to provide a surface light emitting apparatus that can create an atmosphere that gives a psychological effect pleasing and appealing to human senses.

Moreover, according to the present invention, since the differently colored lights introduced into the plurality of hollow cells separated by transparent ribs can be mixed together, and the resulting colored light can be emitted from the surface of the hollow multilayer structure, it is possible to produce a color illumination that has not been possible with the prior art.

Further, according to the present invention, since the differently colored lights introduced into the plurality of hollow cells separated by opaque ribs can be emitted from the surface of the hollow multilayer structure without mixing them together, it is possible to produce illumination of a color that has not been possible with the prior art.

### BRIEF DESCRIPTION OF THE DRAWINGS

Figure 1 is a front view of a wall-hanging panel type surface light emitting apparatus according to the present invention as viewed facing the light emitting side thereof.
Figure 2 is a cross-sectional view of the wall-hanging panel type surface light emitting apparatus shown in Figure 1.
Figure 3 is a diagram schematically showing the configuration of a light source used in the wall-hanging panel type surface light emitting apparatus.
Figure 4 is a perspective view of a hollow multilayer structure.
Figure 5 is a diagram showing the direction along which grooves are formed in the hollow multilayer structure.
Figure 6 is a cross-sectional view of another wall-hanging panel type surface light emitting apparatus.
Figure 7 is a diagram schematically showing the structure of a light conducting member.
Figure 8 is a cross-sectional view of still another wall-hanging panel type surface light emitting apparatus.
Figure 9 is a diagram showing one example illustrating how the hollow multilayer structure is illuminated with colored lights emitted from LEDs.
Figure 10 is a perspective view of an alternative hollow multilayer structure.
Figure 11 is a diagram showing another example illustrating how the hollow multilayer structure is illuminated with colored lights emitted from LEDs.
Figure 12 is a front view of a floor-standing panel type surface light emitting apparatus according to the present invention as viewed facing the light emitting side thereof.
Figure 13 is a cross-sectional view of a portion of the floor-standing panel type surface light emitting apparatus shown in Figure 12.
Figure 14 is a perspective view of a double-sided illumination panel type surface light emitting apparatus according to the present invention.
Figure 15 is a cross-sectional view of the double-sided illumination panel type surface light emitting apparatus shown in Figure 14.
Figure 16 is a perspective view of a hollow multilayer structure used in the double-sided illumination panel type surface light emitting apparatus shown in Figure 14.

### DETAILED DESCRIPTION OF THE PREFERRED EMBODIMENT

A surface light emitting apparatus according to the present invention will be described below with reference to the drawings. However, it should, be understood that the present invention is not limited to the embodiments shown in the drawings or illustrated herein.

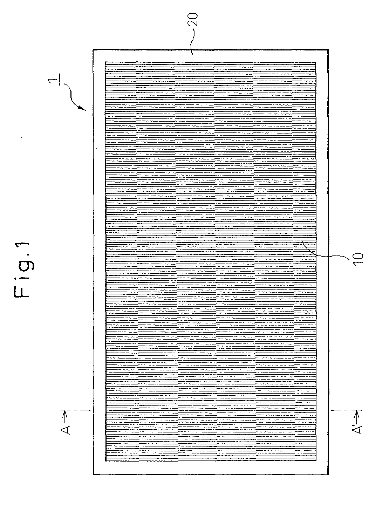

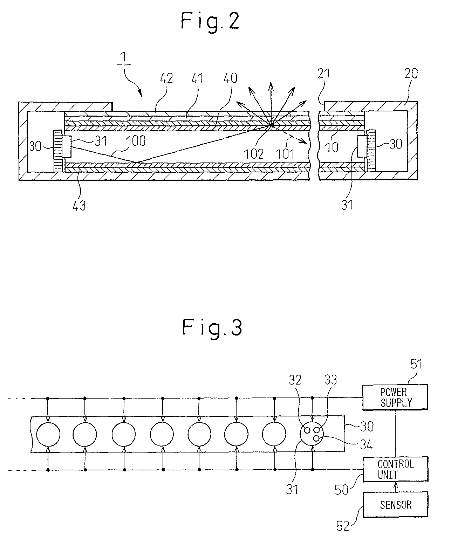

Figure 1 is a front view of a wall-hanging panel type surface light emitting apparatus 1 as viewed facing the light emitting side thereof when the surface light emitting apparatus according to the present invention is constructed as a wall-hanging panel. Figure 2 is a cross-sectional view taken along line AA' in Figure 1.

As shown in Figures 1 and 2, the wall-hanging panel type surface light emitting apparatus 1 comprises a hollow multilayer structure 10, a frame member 20 having an opening 21, an LED circuit substrate 30, and LEDs 31. A first diffusing sheet 40, a lens sheet 41, and a second diffusing sheet 42 are formed one on top of another in this order on the light emitting surface side of the hollow multilayer structure 10 (i.e., the same side as the opening 21 of the frame 20). A reflective sheet 43 is provided on the back surface side of the hollow multilayer structure 10.

Figure 3 is a diagram schematically showing the LED circuit substrate 30 and the light source constructed from the LEDs 31. The circuitry mounted thereon is not shown here.

The plurality of LEDs 31 are arranged at equally spaced intervals on the LED circuit substrate 30. Each LED is a three-in-one LED comprising a red LED element 32, a green LED element 33, and a blue LED element 34 in a single package, and can emit light of a designated one of a plurality of colors by mixing colored lights from the respective LED element according to an input signal. Each LED 31 illuminates in the designated color by a current supplied from a power supply 51 in accordance with the control timing and the color designated by a control unit 50. The use of a sensor 52 will be described later, but the provision thereof is not essential. Further, each LED 31 may be constructed from a single-color LED, for example, a red LED, a green LED, a blue LED, or a white LED. When using single-color LEDs, it is preferable to arrange a plurality of LEDs so as to correspond with one hollow cell, because a variety of colors can then be produced. For the LEDs, not only the above-described chip type but other types of LED such as an oval type or a shell type can also be used.

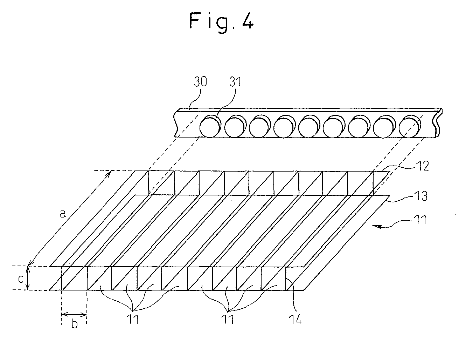

Figure 4 is a perspective view showing the hollow multilayer structure 10.

The hollow multilayer structure 10 is constructed by integrally forming a plurality of hollow cells 11 one adjacent to another along the longitudinal direction thereof. More specifically, the structure comprises a top plate 12, a bottom plate 13, and a plurality of ribs 14. The term multilayer in the hollow multilayer structure 10 refers to at least two layers consisting of the top plate 12 as the front layer and the bottom plate 13 as the back layer. Each cell is a space enclosed by the top plate, bottom plate, and ribs and having openings at both ends.

In the present embodiment, the hollow cells 11 each measure 750 mm in length a, 6 mm in horizontal width b, and 6 mm in vertical width (height) c, and the top plate 12, the bottom plate 13, and the ribs 14 are all formed from a 0.33-mm thick transparent polycarbonate resin (hereinafter called the PC resin). The above hollow cell size is only one example, and other dimensions may be employed. Further, the hollow multilayer structure may be formed from a PMMA resin, an MS resin, a polyester resin such as PET, a PSt resin, a COP resin, a COC resin, an olefin resin such as a PP resin or a PE resin, a PVC resin, an ionomer resin, glass, etc.

As shown in Figure 4, each LED 31 has a shape insertable in the corresponding hollow cell 11, and as shown in Figure 2, when fabricating the wall-hanging panel type surface light emitting apparatus 1, the LEDs 31 are mounted so as to be inserted into the openings of the respective hollow cells 11. In view of this, it is preferable to determine the dimensions b x c of each hollow cell 11 so that the LED 31 used as the light source fits into it.

Preferably, the LEDs 31 are arranged with their light emission centers aligned parallel to the longitudinal direction of the respective hollow cells 11, and more preferably, the LEDs 31 are arranged so that their light emission centers coincide with the longitudinal center lines of the respective hollow cells 11. With the LEDs inserted into the openings of the respective hollow cells 11, the structure offers several advantages, such as preventing the LEDs from being misaligned relative to the multilayer structure, enhancing the light emission efficiency by preventing the light from each LED from spreading out, and enhancing the fabrication work efficiency by integrating the LEDs with the hollow cells.

In the above example, one LED is provided for each hollow cell, but LEDs need not necessarily be provided for all the cells. For example, the LEDs may be provided one for every predetermined number of cells, for example, one for every two cells. Alternatively, the hollow multilayer structure may be constructed by arranging large hollow cells alternately with small hollow cells having a smaller horizontal width dimension (b) or vertical width dimension (c), and LEDs may be provided only for the larger hollow cells and no LEDs for the smaller hollow cells. Even when the LEDs are provided only for the larger hollow cells in such a hollow multilayer structure, the structure functions as the surface light emitting apparatus because the surfaces of the smaller cells are illuminated with colored lights diffusing from the larger cells into the smaller cells.

Next, a description will be given of light deflecting means by which light entering each hollow cell 11 through a cell opening from a side face of the hollow multilayer structure 10 is caused to emerge from the light emitting surface of the hollow multilayer structure 10.

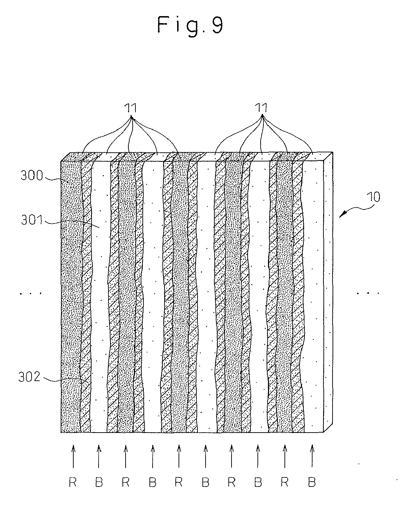

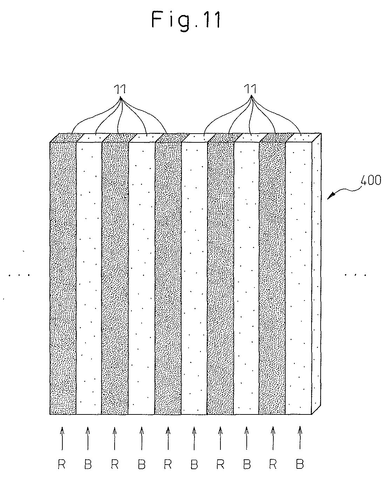

As shown in Figure 2, much of the light 100 emitted from the LED 31 propagates through the hollow cell 11 along its longitudinal direction, while undergoing reflections therein, toward the other LED 31 mounted at the opposite end (for example, see light 101). In this situation, it cannot be expected that a sufficient amount of light will emerge from the light emitting surface of the hollow multilayer structure 10. To address this, in the surface light emitting apparatus according to the present invention, a plurality of V-shaped grooves (each measuring 3 µm in depth and 20 µm in width) are formed extending along direction X orthogonal to the longitudinal direction of the hollow cell over the entire light emitting surface (of the top plate 12) of the hollow multilayer structure 10. The V-shaped grooves are formed by continuously varying the interval, i.e., at 5-mm interval in the portion near the LED 31 and at 50-µm interval in the center portion of the hollow cell 11. When the light 100 emitted from the LED 31 and propagated through the hollow cell 11 strikes the top plate 12 and is incident on one such V-shaped groove 102, the incident light is directed toward the light emitting surface of the hollow multilayer structure 10. In this way, the light emitted from each LED 31 is caused to emerge from the light emitting surface of the hollow multilayer structure 10 by the V-shaped grooves formed over the entire surface of the hollow multilayer structure 10. In this case, the viewer views the surface illuminated with colored light. The light emitted from each LED 31 mostly emerges from the entire light emitting surface that extends along the longitudinal direction of the hollow cell into which the LED 31 is fitted. However, if the ribs 14 in the hollow multilayer structure 10 are transparent, the light gradually diffuses into the light emitting surfaces of the adjacent hollow cells, producing naturally colored lights near each rib 14 due to additive color mixing and thus generally resulting in the formation of stripe patterns (see Figure 9). On the other hand, if the ribs 14 are opaque, the light does not diffuse into the adjacent hollow cells, and as a result, clearly defined stripe patterns are formed (see Figure 11).

In the example of Figure 2, the LED 31 is provided at each end of the hollow cell, but the LED 31 may be provided only at one end. In that case, it is preferable to provide a reflective sheet at the end face where the LED 31 is not provided.

The first and second diffusing sheets 40 and 42 for evenly spreading the light emerging from the light emitting surface and the lens sheet 41 by which the scattered light from the hollow multilayer structure 10 is deflected in a direction perpendicular to the light emitting surface are provided on the light emitting side of the hollow multilayer structure 10. In the example of Figure 2, only one lens sheet is provided, but two lens sheets may be provided for X and Y directions respectively. Further, considering the fact that the light exiting each V-shaped groove is not always directed toward the light emitting side of the hollow multilayer structure 10, the reflective sheet 43 is provided on the back surface side of the hollow multilayer structure 10 in order to make effective use of the light and to increase the amount of light that emerges from the light emitting surface of the hollow multilayer structure 10. Here, if the reflective sheet is not used, the lightness and saturation of the illuminated surface can be adjusted lower, making it easier to produce color illumination having darker color shades. In that case, color illumination having transparency and depth like those of a crystal can also be produced by utilizing the phenomenon that delicate shades are formed within the hollow cells.

Preferably, the first and second diffusing sheets 40 and 42 are each formed from a transparent resin such as a PC resin or a PET resin. For the lens sheet 41, it is preferable to use a BEF sheet or a DBEF sheet (both manufactured by 3M). For the reflective sheet 43, it is preferable from the standpoint of increasing the amount of emergent light to use a sheet or structure whose reflectance to visible light is 50% or higher (more preferably, 80% or higher), such as a sheet formed from a PET film containing titanium oxide or the like, a sheet formed by depositing aluminum, silver, or the like on a PET film, or a low foamed structure formed from a PC resin, a PET resin, or the like.

The first and second diffusing sheets 40 and 42, the lens sheet 41, and the reflective sheet 43 need not necessarily be provided, but should be provided as needed according to the application.

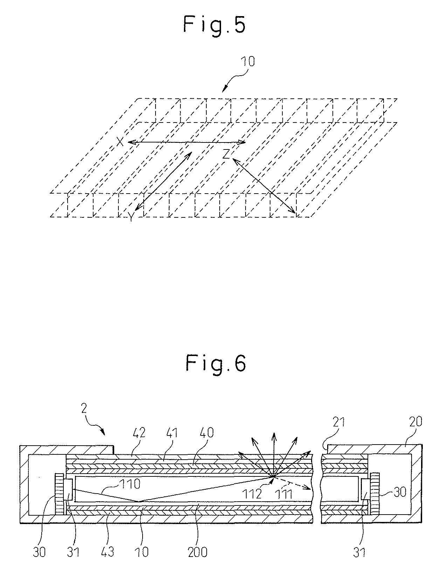

In the above example, the plurality of V-shaped grooves as one example of the light deflecting means are formed extending along direction X orthogonal to the longitudinal direction of the hollow cell over the entire light emitting surface of the hollow multilayer structure 10. However, the direction along which each V-shaped groove is formed is not necessarily limited to the direction X orthogonal to the longitudinal direction of the hollow cell, but each groove may be formed, for example, along direction Y parallel to the longitudinal direction of the hollow cell, or along a direction, such as Z direction, tilted at an angle of 35 to 55 degrees, preferably 45 degrees, relative to the longitudinal direction of the hollow cell (see Figure 5). Further, each V-shaped groove need not necessarily be formed continuously, but may be formed in a discontinuous manner.

Further, in the above example, the V-shaped grooves 102, each measuring 3 µm in depth and 20 µm in width, are formed at an interval varying from 5 mm to 50 µm, but the dimensions and interval of the V-shaped grooves are not limited to these specific values, and other suitable values can be employed as needed. Among them, the depth of each V-shaped groove is preferably in the range of 3 to 6 µm, and the width is preferably in the range of 20 to 40 µm. Further, the V-shaped grooves may be formed at equal interval over the entire longitudinal length of the hollow cell 11.

As the light deflecting means, use may be made of other patterns than the V-shaped grooves described above, such as U-shaped grooves, a dot pattern (a pattern of dot-like microscopic projections and depressions) engraved or printed by laser, an array of inverted square pyramid shaped depressions, random projections and depressions formed by chemical, plasma, electron beam, or other etching techniques, inverted V-shaped projections, and inverted U-shaped projections. Further, the V-shaped grooves, the U-shaped grooves, the dot pattern, the array of inverted square pyramid shaped depressions, the random projections and depressions formed by etching, the inverted V-shaped projections, the inverted U-shaped projections, etc. described above may be formed not only on the front surface of the top plate 12, that is, the light emitting surface of the hollow multilayer structure 10, but also on the back surface of the top plate 12 or the front or back surface of the bottom plate 13 disposed on the side opposite from the light emitting surface side, or on more than one of these surfaces.

Further, the light deflecting means may be provided in the form of a random projection/depression pattern formed on the front surface of the top plate 12 that forms the light emitting surface of the hollow multilayer structure 1.0. The random projection/depression pattern can be formed by roughening the surface of the hollow multilayer structure by sandblasting, or by engraving the pattern in the surface of the top plate 12 by a heated press plate having such a projection/depression pattern. In this case, the Rz value (JIS 2001-B0601) of the projection/depression pattern is preferably not smaller than 0.04 µm but not larger than two-thirds of the thickness of the top plate 12 of the hollow multilayer structure. If the roughness is smaller than 0.04 µm, the colored light from the light source cannot be sufficiently scattered, nor can the light be caused to emerge effectively. However, if it is larger than two-thirds of the thickness of the top plate 12 of the hollow multilayer structure, the hollow multilayer structure cannot retain sufficient strength. The random projection/depression pattern may be formed on the back surface of the top plate 12 of the hollow multilayer structure 10 or the front or back surface of the bottom plate 13 disposed on the side opposite from the light emitting surface side, or on more than one of these surfaces.

Alternatively, the light deflecting means may be provided in the form of (optically transmissive) projections formed by spraying a solution containing a thermosetting or thermoplastic resin, rubber, or a gel-like material over the front surface of the top plate 12 that forms the light emitting surface of the hollow multilayer structure 10, and thereafter solidifying the solution by volatizing the solvent in the solution or by thermally curing the solution.

Further, the light deflecting means may be provided in the form of air bubbles formed in the hollow multilayer structure by such means as laser radiation or heating.

Alternatively, the light deflecting means may be formed by adding a diffusing material in the hollow multilayer structure 10. As the diffusing material to be added here, use can be made of inorganic particles of glass, silica, mica, synthetic mica, calcium carbonate, barium sulfate, talc, montmorillonite, kaolin clay, bentonite, hectorite, etc., metal oxide particles of titanium oxide, zinc oxide, tin oxide, alumina, etc., or polymer particles of acrylic beads, styrene beads, benzoguanamine, silicone, etc. For example, when the hollow multilayer structure 10 is formed from a PC resin, haze is 67.3% when 0.05 parts of silicone with an average particle size of 2 µm are added as the diffusing material per 100 parts of the PC resin, 83% when 0.1 parts of such silicone are added, and 93% when 0.5 parts of such silicone are added. The haze when the diffusing material is added is preferably not lower than 10% but not greater than 99%. If the haze is lower than 10%, a sufficient light scattering effect cannot be obtained, and if it is greater than 99%, a sufficient amount of emergent light cannot be obtained.

The light deflecting means may also be provided in the form of a light conducting member 200 placed inside each hollow cell 11 in the hollow multilayer structure 10.

Figure 6 shows one example of a panel type surface light emitting apparatus 2 that uses such a light conducting member 200.

The panel type surface light emitting apparatus 2 is similar in structure to the foregoing wall-hanging panel type surface light emitting apparatus 1, except that the light conducting member 200 is inserted in each hollow cell 11 in the hollow multilayer structure 10 and that no V-shaped grooves are formed on the top panel 12 on the light emitting side of the hollow multilayer structure 10, and therefore, only the differences in structure will be described below.

In the panel type surface light emitting apparatus 2 shown in Figure 6, much of the light 110 emitted from the LED 31 propagates through the light conducting member 200, while undergoing reflections therein, toward the other LED 31 mounted at the opposite end (for example, see light 111). In the illustrated example, a plurality of V-shaped grooves (each measuring 3 µm in depth and 20 µm in width) are formed extending along direction X orthogonal to the longitudinal direction of the light conducting member over the entire light emitting surface of the light conducting member 200 (in Figure 6, the surface on the same side as the opening 21 of the frame member 20). The V-shaped grooves are formed by continuously varying the interval, i.e., at 5-mm interval in the portion near the LED 31 and at 50-µm interval in the center portion of the hollow cell 11. When the light 110 emitted from the LED 31 is incident on one such V-shaped groove 112, the incident light is directed toward the light emitting surface of the light conducting member 200. In this way, the light emitted from each LED 31 is caused to emerge from the entire light emitting surface of the hollow multilayer structure 10 by the V-shaped grooves formed on the light emitting surface of the light conducting member 200. The light emitted from each LED 31 mostly emerges from the entire light emitting surface of the light conducting member 200 that extends along the longitudinal direction of the light conducting member into which the LED 31 is fitted; here, if the ribs 14 in the hollow multilayer structure 10 are transparent, the light gradually diffuses into the light emitting surfaces of the adjacent hollow cells, producing naturally colored lights near each rib 14 due to additive color mixing and thus generally resulting in the formation of stripe patterns. On the other hand, if the ribs 14 are opaque, the light does not diffuse into the adjacent hollow cells, and as a result, clearly defined stripe patterns are formed.

The first and second diffusing sheets 40 and 42 for evenly spreading the light emerging from the light emitting surface and the lens sheet 41 by which the scattered light from the hollow multilayer structure 10 is deflected in a direction perpendicular to the light emitting surface are provided on the light emitting side of the hollow multilayer structure 10. Further, considering the fact that the light reflected by each V-shaped groove is not always directed toward the light emitting side of the hollow multilayer structure, the reflective sheet 43 is provided on the back surface side of the hollow multilayer structure 10 in order to make effective use of the light and to increase the amount of light that emerges from the light emitting surface of the hollow multilayer structure 10. Here, if the reflective sheet is not used, the lightness and saturation can be adjusted lower, making it easier to produce color illumination having darker color shades. In that case, color illumination having transparency and depth like those of a crystal can also be produced by utilizing the phenomenon that delicate shades are formed within the hollow cells.

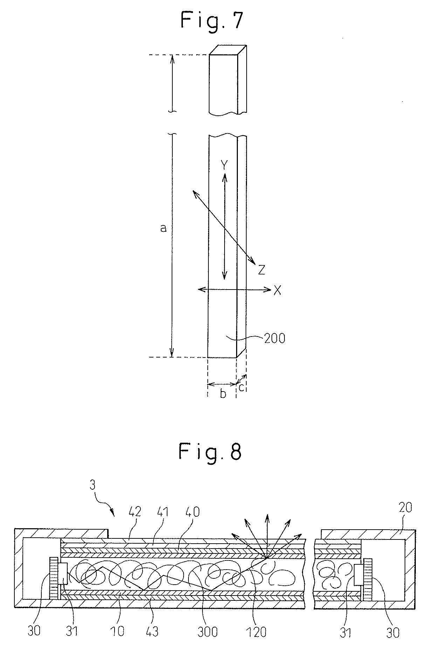

Figure 7 shows one example of the light conducting member 200 used in the panel type surface light emitting apparatus 2 shown in Figure 6.

As shown in Figure 7, the light conducting member 200 is formed from an MMA (methyl methacrylate) resin measuring 740 mm in length a, 5 mm in horizontal width b, and 5 mm in vertical width (height) c so that it can be inserted in the hollow cell 11. Like the hollow multilayer structure 10, the light conducting member 200 may also be formed from a PMMA resin, an MS resin, a PC resin, a polyester resin such as PET, a PSt resin, a COP resin, a COC resin, an olefin resin such as a PP resin or a PE resin, a PVC resin, an ionomer resin, glass, etc.

In the above example, the V-shaped grooves are formed extending along direction X orthogonal to the longitudinal direction of the light conducting member 200 over the entire surface thereof on the light emitting side of the hollow multilayer structure 10; however, the direction along which each V-shaped groove is formed is not necessarily limited to the direction X orthogonal to the longitudinal direction of the light conducting member 200, but each groove may be formed, for example, along direction Y parallel to the longitudinal direction of the light conducting member 200, or along a direction, such as Z direction, tilted at an angle of 35 to 55 degrees, preferably 45 degrees, relative to the longitudinal direction of the light conducting member 200. Further, each V-shaped groove need not necessarily be formed continuously, but may be formed in a discontinuous manner. Further, in the above example, the V-shaped grooves 112, each measuring 3 µm in depth and 20 µm in width, are formed at an interval varying from 5 mm to 50 µm, but the dimensions and interval of the V-shaped grooves are not limited to these specific values, and other suitable values can be employed as needed.

In the above example, the V-shaped grooves are formed on the light conducting member 200 but, instead of the V-shaped grooves, use may be made of other patterns such as U-shaped grooves, a dot pattern (a pattern of dot-like microscopic projections and depressions) engraved or printed by laser, a random projection/depression pattern, an array of inverted square pyramid shaped depressions, random projections and depressions formed by chemical, plasma, electron beam, or other etching techniques, inverted V-shaped projections, and inverted U-shaped projections. Further, the V-shaped grooves, the U-shaped grooves, the dot pattern, the random projection/depression pattern, the array of inverted square pyramid shaped depressions, the random projections and depressions formed by etching, the inverted V-shaped projections, the inverted U-shaped projections, etc. described above may be formed, not on the light emitting surface of the light conducting member 200, but on the back surface thereof opposite from the light emitting surface, or on both surfaces of the light conducting member 200.

Further, instead of forming patterns such as the V-shaped grooves, U-shaped grooves, dot-like pattern, or random projection/depression pattern on the light conducting member 200, a diffusing material may be added in the light conducting member 200. As the diffusing material to be added, inorganic particles of glass, silica, mica, synthetic mica, calcium carbonate, barium sulfate, talc, montmorillonite, kaolin clay, bentonite, hectorite, etc., metal oxide particles of titanium oxide, zinc oxide, tin oxide, alumina, etc., or polymer particles of acrylic beads, styrene beads, benzoguanamine, silicone, etc., can be used.

The light deflecting means may also be provided in the form of a light diffusing material disposed inside each hollow cell 11.

Figure 8 shows one example of a panel type surface light emitting apparatus 3 that uses such a light diffusing material 300.

The panel type surface light emitting apparatus 3 is similar in structure to the earlier described wall-hanging panel type surface light emitting apparatus 1, except that the light diffusing material 300 is inserted in each hollow cell 11 in the hollow multilayer structure 10 and that no V-shaped grooves are formed on the light emitting surface of the hollow multilayer structure 10, and therefore, only the differences in structure will be described below.

In the panel type surface light emitting apparatus 3 shown in Figure 8, the light 120 emitted from each LED 31 is reflected by the light diffusing material 300 disposed inside the hollow cell 11 and randomly emerges from the light emitting surface (light emitting side) of the hollow multilayer structure 10.

As the light diffusing material 300, use can be made of particles of highly reflective metal, particles of superfine fibers containing titanium oxide, particles of PET-based nonwoven fabric, particles of highly reflective tape or Japanese paper, or particles produced by adding a diffusing material in an optically transparent resin.

The above is an illustrated example in which the light deflecting means is provided in the hollow multilayer structure (see Figure 2), an example in which the light deflecting means is provided in the light conducting member (see Figure 6), and an example in which the light deflecting means is provided in the form of a light diffusing material (see Figure 8). However, it is to be understood that these three methods can be suitably combined for use.

In this way, by incorporating the light deflecting means in the hollow multilayer structure 10, it is possible to achieve a surface light emitting apparatus using light emitted from LEDs. According to the surface light emitting apparatus of the present invention, since the light emitted from each LED can be efficiently conducted and diffused by the use of the hollow multilayer structure 10, a light-weight surface light emitting structure simple in construction can be provided. Furthermore, since the hollow multilayer structure is constructed from a plurality of hollow cells, each hollow cell can be illuminated with a differently colored light and different timing by providing a light source for each hollow cell.

Figure 9 shows one example illustrating how the light emitting surface of the hollow multilayer structure is illuminated with the colored lights emitted from the respective LEDs.

In the example shown in Figure 9, the ribs 14 partitioning the hollow multilayer structure 10 into the plurality of hollow cells 11 are transparent as shown in Figure 4. It is also assumed that the red and blue LEDs are arranged in alternating fashion to illuminate the respective hollow cells 11 as shown in Figure 9. In this case, the red and blue colored lights entering the respective hollow cells 11 are additively mixed only in a region near the rib 14 (the region 302), and the resulting magenta colored light emerges from the light emitting surface of the hollow multilayer structure 10. On the other hand, the center regions of the respective hollow cells illuminate in the respective colors (the region 301 in red color and the region 303 in blue color) generally producing a red/blue stripe pattern on the light emitting surface of the hollow multilayer structure 10.

In this way, in the wall-hanging panel-type surface light emitting apparatus 1 to 3 using the hollow multilayer structure 10 whose ribs 14 are transparent, the colored lights emitted from the plurality of LEDs 31 can be mixed together to produce color illumination greater in variety and richer in expressiveness than is possible with one LED 31 alone.

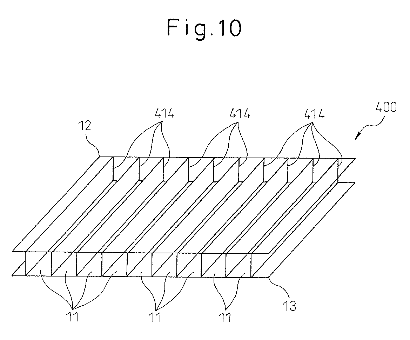

Figure 10 shows a perspective view of an alternative hollow multilayer structure.

The difference between the hollow multilayer structure 400 shown in Figure 10 and the hollow multilayer structure 10 shown in Figure 4 is that the ribs 414 partitioning the hollow multilayer structure 400 shown in Figure 10 are opaque. The reflectance of each rib 414 to visible light is preferably 50% or higher, and more preferably 70% or higher. This can be accomplished, for example, by coating each rib 414 with a titanium-oxide-containing paint or by forming a vaporized Ag or Al film on each rib 414.

Figure 11 shows another example illustrating how the hollow multilayer structure is illuminated with the colored lights emitted from the respective LEDs.

In the example shown in Figure 11, the ribs 414 partitioning the hollow multilayer structure 400 into the plurality of hollow cells 11 are opaque as shown in Figure 10. It is also assumed that the red and blue LEDs are arranged in alternating fashion to illuminate the respective hollow cells 11 as shown in Figure 11. In this case, the red and blue colored lights entering the respective hollow cells 11 do not mix between them, but emerge independently of each other from the respective hollow cells 11 to illuminate the light emitting surface of the hollow multilayer structure 400 with the respective colored lights.

In this way, in the wall-hanging panel type surface light emitting apparatus 1 to 3 using the hollow multilayer structure 400 whose ribs 414 are opaque, the colored lights emitted from the plurality of LEDs 31 can be output without being mixed between the respective hollow cells. For example, if colored lights identical in hue, but different in lightness are emitted from the respectively adjacent LEDs, the light emitting surface of the surface light emitting apparatus can be illuminated with gradations of colored light. Further, if the colored lights being emitted from the plurality of LEDs 31 at predetermined intervals of time are changed as time elapses, a display of a moving color like a neon sign can be produced.

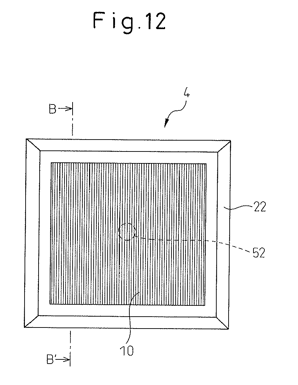

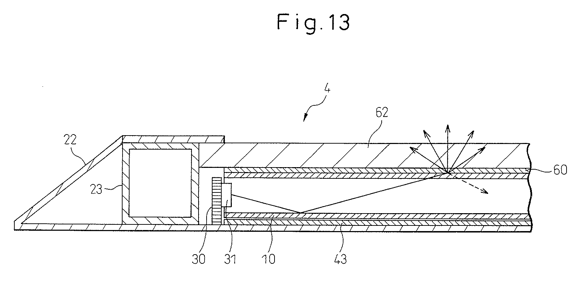

Figure 12 is a front view of a floor-standing panel type surface light emitting apparatus 4 as viewed facing the light emitting side thereof when the surface light emitting apparatus according to the present invention is constructed as a floor-standing panel. Figure 13 is a cross-sectional view taken along line BB' in Figure 12.

In the floor-standing panel type surface light emitting apparatus 4 shown in Figures 12 and 13, the same component elements as those in the earlier described wall-hanging panel type surface light emitting apparatus 1 are designated by the same reference numerals, and the description of such elements will not be repeated here. As shown in Figures 12 and 13, the floor-standing panel type surface light emitting apparatus 4 comprises a hollow multilayer structure 10, a frame member 22, an LED circuit substrate 30, and LEDs 31. The hollow multilayer structure 10 is essentially the same as that described in connection with the wall-hanging panel-type surface light emitting apparatus 1, the only difference being the overall shape.

As shown in Figure 13, in the floor-standing panel-type surface light emitting apparatus 4, a color filter 60 for adjusting the hue of the light emitting surface and a protective plate 62 formed from a PC resin are provided on the light emitting surface of the hollow multilayer structure 10 (on the upper surface in Figure 13), and a reflective sheet 43 is disposed on the back surface side of the hollow multilayer structure 10. Further, a reinforcing block 23 is placed between the circuit substrate 30 and the frame member 22. A pressure sensor 52 is mounted on the back surface of the hollow multilayer structure 10 at a position substantially centralized in the floor-standing panel type surface light emitting apparatus 4. The sensor can be selected from among various known sensors such as a sensor for detecting infrared radiation, photocurrent, sound, temperature, vibration, magnetism, or humidity.

In use, the floor-standing panel-type surface light emitting apparatus 4 is installed so as to be embedded in the floor of a passage, corridor, etc., for example, in a public facility. The floor-standing panel-type surface light emitting apparatus 4 may be used as an illumination apparatus for continuously illuminating the passage, or as a guide light for indicating an emergency exit by illuminating only at the time of emergency, or as an illumination apparatus that is turned on by the action of the pressure sensor 52 only when the user steps on the floor-standing panel-type surface light emitting apparatus 4.

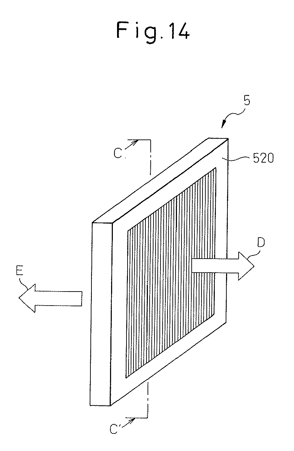

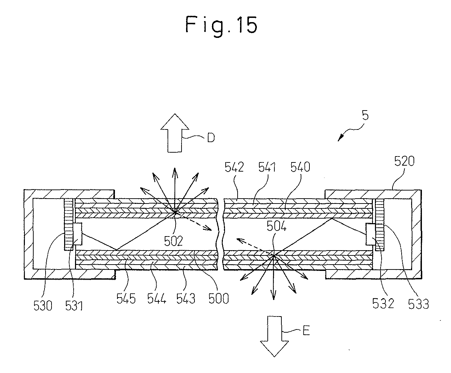

Figure 14 is a perspective view showing a double-sided illumination panel-type surface light emitting apparatus 5 when the surface light emitting apparatus according to the present invention is constructed as a double-sided illumination panel. Figure 15 is a cross-sectional view taken along line CC' in Figure 14.

As shown in Figures 14 and 15, the double-sided illumination panel type surface light emitting apparatus 5 comprises a hollow multilayer structure 500, a frame member 520, a first circuit substrate 530, a first LED array 531, a second LED array 532, and a second circuit substrate 533. The configuration of the first circuit substrate 530 and the first LED array 531 and the configuration of the second LED array 532 and the second circuit substrate 533 are the same as that illustrated in the example of the wall-hanging panel type surface light emitting apparatus 1 shown in Figure 3, and therefore, the description thereof will not be repeated here. A first diffusing sheet 540, a first lens sheet 541, and a second diffusing sheet 542 are formed one on top of another in this order on the first light emitting surface side (the side indicated by arrow D) of the hollow multilayer structure 500. Likewise, a third diffusing sheet 543, a second lens sheet 544, and a fourth diffusing sheet 545 are formed one on top of another in this order on the second light emitting surface side (the side indicated by arrow E) of the hollow multilayer structure 500.

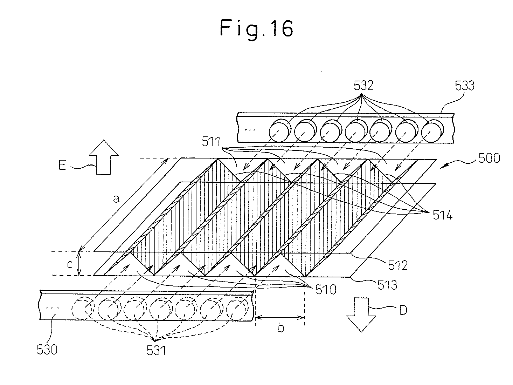

Figure 16 is a perspective view showing the hollow multilayer structure 500.

The hollow multilayer structure 500 is constructed by integrally forming a plurality of hollow cells 510 and 511 one alternating with the other along the longitudinal direction thereof. More specifically, the structure comprises a first top plate 512, a second top plate 513, and a plurality of ribs 514. In the hollow multilayer structure 500 shown in Figure 16, the ribs 514 are sandwiched between the first and second top plates 512 and 513 by being alternately slanted in opposite directions, and partition the structure into the plurality of hollow cells 510 and 511. Further, like the ribs 414 shown in Figure 10, the ribs 514 are opaque so that color mixing does not occur between adjacent hollow cells. The method of forming the opaque ribs 514 is the same as that for the ribs 414 shown in Figure 10, and the description will not be repeated here.

In Figure 16, the hollow cells 510 and 511 each measure 750 mm in length a, 6 mm in horizontal width b, and 6 mm in vertical width (height) c, and the first top plate 512, the second top plate 513, and the ribs 514 are all 0.33 mm in thickness. The above hollow cell size is only one example, and other dimensions may be employed. The hollow multilayer structure 500 is formed from a PC resin, but it may be formed from a PMMA resin, an MS resin, a polyester resin such as PET, a PSt resin, a COP resin, a COC resin, an olefin resin such as a PP resin or a PE resin, a PVC resin, an ionomer resin, glass, etc.

Further, as shown in Figure 16, the first LED array 531 is arranged so that the respective LEDs are inserted in the plurality of hollow cells 510 and 511, and the second LED array 532 is also arranged so that the respective LEDs are inserted in the plurality of hollow cells 510 and 511. That is, one of the LEDs in the first LED array 531 is mounted at one end of one of the hollow cells 510 and 511, while one of the LEDs in the second LED array 532 is mounted at the other end. Alternatively, the first and second LED arrays 531 and 532 may be arranged so that the LEDs are each mounted only at one end of each of the hollow cells 510 and 511, rather than mounting the LEDs at both ends.

In the hollow multilayer structure 500, V-shaped grooves 502 (each measuring 3 µm in depth and 20 µm in width, with groove interval varying from 5 mm to 50 µm) are formed as light deflecting means extending along a direction orthogonal to the longitudinal direction of the hollow cell over the entire first light emitting surface (on the side indicated by arrow D), and likewise, V-shaped grooves 504 (each measuring 3 µm in depth and 20 µm in width, with groove interval varying from 5 mm to 50 µm) are formed as light deflecting means extending along a direction orthogonal to the longitudinal direction of the hollow cell over the entire second light emitting surface (on the side indicated by arrow E).

Accordingly, the light emitted from the first LED array 531 and entering the hollow cells 510 is deflected by the V-shaped grooves 502 and emerges from the first light emitting surface (on the side indicated by arrow D). On the other hand, the light emitted from the second LED array 532 and entering the hollow cells 511 is deflected by the V-shaped grooves 504 and emerges from the second light emitting surface (on the side indicated by arrow E). In this way, the double-sided illumination panel-type surface light emitting apparatus 5 that can emit light from both sides can be achieved using one hollow multilayer structure 500.

Further, in the double-sided panel-type surface light emitting apparatus 5, any type of light deflecting means used in the wall-hanging panel-type surface light emitting apparatus 1 can be used.

While the surface light emitting apparatus of the present invention has been described by dealing with examples in which the invention is applied to a wall-hanging panel type apparatus, a floor-standing panel type apparatus, and a double-sided panel type apparatus, respectively, it will be recognized that the surface light emitting apparatus of the invention can be adapted for use in many applications other than the panel-type, for example, as an indoor or outdoor illumination apparatus, furniture, etc., by taking advantage of its light-weight and simple construction. Furthermore, the surface light emitting apparatus of the invention can be mounted not only on a wall, but also on any other indoor or outdoor surface or object such as a pillar, ceiling, floor, baseboard, etc.

As described above, when the surface light emitting apparatus of the invention is used, since a color stripe pattern can be produced on the light emitting surface by illuminating each hollow cell with a differently colored light, the "principle of order" that colors selected based on orderly or simple geometric relations harmonize well can be satisfied by the stripe that describes a color space comprised of equidistant colors. Furthermore, when the surface is illuminated with a stripe-shaped color pattern by illuminating the hollow cells so as to express familiar colors existent in nature and their changes in conformance with the "principle of familiarity," illumination particularly pleasing and appealing to human senses can be achieved.

## Claims

1. A surface light emitting apparatus comprising:
a hollow multilayer structure formed from a plurality of hollow cells;
a light source for emitting light into said hollow multilayer structure through an end face thereof containing a cell opening; and
light deflecting means for causing the light introduced through said cell opening-containing end face of said hollow multilayer structure to emerge from a surface of said hollow multilayer structure.

2. The surface light emitting apparatus according to claim 1, wherein said light deflecting means is a random projection/depression pattern formed on the surface of said hollow multilayer structure.

3. The surface light emitting apparatus according to claim 1, wherein said light deflecting means is a dot pattern or a V-shaped or U-shaped groove formed on the surface of said hollow multilayer structure.

4. The surface light emitting apparatus according to claim 1, wherein said light deflecting means is a diffusing material added in said hollow multilayer structure.

5. The surface light emitting apparatus according to claim 1, wherein said light deflecting means is a light conducting member inserted in each of said hollow cells.

6. The surface light emitting apparatus according to claim 5, wherein said light conducting member is formed with a random projection/depression pattern.

7. The surface light emitting apparatus according to claim 5, wherein said light conducting member is formed with a dot pattern or a V-shaped or U-shaped groove.

8. The surface light emitting apparatus according to claim 5, wherein a diffusing material is added in said light conducting member.

9. The surface light emitting apparatus according to claim 1, wherein said light deflecting means is a light diffusing material inserted in each of said hollow cells.

10. The surface light emitting apparatus according to claim 1, wherein said light source is constructed from a plurality of LEDs.

11. The surface light emitting apparatus according to claim 10, wherein said plurality of LEDs are respectively mounted in said plurality of hollow cells.

12. The surface light emitting apparatus according to claim 10, wherein said plurality of LEDs are mounted one for one in said plurality of hollow cells at least at one of two cell opening-containing end faces of said hollow multilayer structure.

13. A method of light emission for a surface light emitting apparatus having a hollow multilayer structure formed from a plurality of hollow cells each separated by a transparent rib and light deflecting means for causing light introduced through an end face of said hollow multilayer structure to emerge from a surface of said hollow multilayer structure, the method comprising the steps of:
arranging a plurality of light sources for each of said plurality of hollow cells;
introducing differently colored lights respectively emitted from said plurality of light sources into a corresponding one of said plurality of hollow cells; and
emerging colored light produced by mixing the differently colored lights emitted from said plurality of light sources from the surface of said hollow multilayer structure.

14. A method of light emission for a surface light emitting apparatus having a hollow multilayer structure formed from a plurality of hollow cells each separated by an opaque rib and light deflecting means for causing light introduced through an end face of said hollow multilayer structure to emerge from a surface of said hollow multilayer structure, the method comprising the steps of:
arranging a plurality of light sources for each of said plurality of hollow cells;
introducing differently colored lights respectively emitted from said plurality of light sources into a corresponding one of said plurality of hollow cells; and
emerging the differently colored lights emitted from said plurality of light sources and prevented from mixing with each other by said opaque rib from the surface of said hollow multilayer structure.

15. The method of light emission according to claim 13 or 14, wherein said plurality of light sources each include a red LED element, a green LED element, and a blue LED element.

16. The method of light emission according to claim 13 or 14, wherein each of said plurality of light sources is a single red LED, a single green LED, a single blue LED, or a single white LED.

17. The method of light emission according to any one of claims 13 to 16, further comprising the step of causing the colors of the colored lights being emitted from said plurality of light sources to change as time elapses.
